# EUROPEAN PATENT APPLICATION

(11) **EP 3 184 582 A1**
(43) Date of publication of application: **28.06.2017**
(21) Application number: 15833484.7
(22) Date of filing: 21.08.2015
(51) Int. Cl.: C08J 7/04, B05D 7/02, B05D 7/24, B65D 25/34, C08G 77/14, C09D 7/12, C09D 163/00, C09D 183/06

(54) **SOLVENT-RESISTANT RESIN CONTAINER**

(30) Priority: 22.08.2014 JP 2014169348
(71) Applicant: NAGASE CHEMTEX CORPORATION, Osaka 550-8668 (JP)
(72) Inventor: KANAYA, Shingo, Tatsuno-shi Hyogo 679-4124 (JP)
(74) Representative: Vossius & Partner Patentanwälte Rechtsanwälte mbB
(86) International application number: PCT/JP2015/073506
(87) International publication number: WO 2016/027884

(57) **Abstract**

Provided is a molded resin container that is produced from a thermoplastic polyester resin, that exploits the excellent moldability and physical characteristics of the said resin, that can achive high design characteristics, and that also has excellent chemical resistance, and in particular solvent resistance. A solvent-resistant resin container wherein at least the inside surface of a thermoplastic polyester resin container is coated with a cured film that comprises a coating composition that includes as a curable resin component a silsesquioxane derivative that has a ladder type or random type structure and that comprises, as an essential component, 100 to 25 mol% of a repeating unit that is derived from a trialkoxysilane that has a 2-(3,4-epoxycyclohexyl)ethyl group and, as an optional component, 0 to 75 mol% of a repeating unit that is derived from a trialkoxysilane that has an aryl group or a C1-12 alkyl group.

## Description

### TECHNICAL FIELD

The present invention relates to a resin container to which chemical resistant coating has been applied, and particularly to a resin container in which solvent resistance has been imparted to an injection molded resin container or the like capable of achieving high design characteristics.

### BACKGROUND ART

Thermoplastic polyester resins are superior in moldability and capable of being molded into containers superior in design characteristics and therefore have been used to produce various containers (see Patent Document 1). Especially, glycol-modified polyesters are superior in impact resistance, mold transferability, etc., and have been suitably used for containers which are required to have good design characteristics.

Such thermoplastic polyester resins have a certain degree of chemical resistance and are believed to have resistance against hydrocarbons, acids, alkalis, surfactants, and aqueous solutions of chlorides, for example. Accordingly, the thermoplastic polyester resins have been used also for containers for drugs, cosmetics, etc. However, even polyester resins, which are believed to have chemical resistance, have been proved through experiments performed by the present inventor to fail to exhibit solvent resistance under severe conditions where they are exposed to alcohols such as ethanol or industrial alcohol, acetone, or the like at high temperatures for a long period of time. For this reason, the polyester resins could not be used for containers for solvent-containing cosmetics, such as perfume and nail varnish.

On the other hand, there are known as chemical resistant coating compositions those using silsesquioxane compounds having an oxetanyl group (see, for example, Patent Document 2). It, however, is not clear as to what type of chemical resistance they actually have though they are called chemical resistance. Moreover, although their pencil hardness (scratch, peeling) on glass or steel plate has been evaluated, their adhesion to or peel resistance from resin, especially thermoplastic polyester resin, cannot necessarily be secured sufficiently even in contact with a solvent.

### PRIOR ART DOCUMENTS

### PATENT DOCUMENTS

Patent Document 1: JP-A-11-1606
Patent Document 2: JP-A-11-116682

### SUMMARY OF THE INVENTION

### PROBLEMS TO BE SOLVED BY THE INVENTION

Thus, it is an object of the present invention to provide a molded resin container produced from a thermoplastic polyester resin, the container exploiting superior moldability and physical characteristics of the resin and being capable of achieving high design characteristics, and also being superior in chemical resistance, especially solvent resistance.

### SOLUTIONS TO THE PROBLEMS

The present invention is directed to a solvent-resistant resin container that is a thermoplastic polyester resin container in which at least the inside surface of the thermoplastic polyester resin container is coated with a cured film formed from a coating composition comprising, as a curable resin component, a silsesquioxane derivative having a ladder or random structure, the silsesquioxane derivative comprising RSiO_{3/2} as repeating units, wherein all of the repeating units contained in a single molecule consists of 100 to 25 mol% of a repeating unit having a 2-(3,4-epoxycyclohexyl)ethyl group as R as an essential component and 0 to 75 mol% of a repeating unit having an aryl group or an alkyl group having 1 to 12 carbon atoms as R as an optional component.

The present invention is directed also to a method for producing a solvent-resistant resin container, comprising coating at least the inside surface of a thermoplastic polyester resin container with a cured film formed from a coating composition comprising, as a curable resin component, a silsesquioxane derivative having a
2-(3,4-epoxycyclohexyl)ethyl group and having a ladder or random structure, the silsesquioxane derivative being obtainable by hydrolyzing/co-condensing a trialkoxysilane having a 2-(3,4-epoxycyclohexyl)ethyl group as an essential component and a trialkoxysilane having an aryl group or an alkyl group having 1 to 12 carbon atoms as an optional component in a molar ratio of from 100:0 to 25:75.

### ADVANTAGES OF THE INVENTION

A resin container of the present invention can achieve high design characteristics by exploiting superior moldability and physical characteristics of a thermoplastic polyester resin and can well impart good chemical resistance in which polyester resins are short, especially, superior resistance against solvents such as high concentration alcohol (e.g., ethanol and industrial alcohol) and acetone. Accordingly, for example, molded containers having high design characteristics and high solvent resistance can be produced from resin that can substitute for glass. Moreover, since the resin container of the present invention can impart solvent resistance to a molded resin container, it can achieve design characteristics more flexible than glass as a solvent-resistant container and can be applied suitably for high value solvent-resistant containers, such as containers for solvent-containing cosmetics such as perfume and nail varnish.

### MODE FOR CARRYING OUT THE INVENTION

In the solvent-resistant resin container of the present invention, at least the inside surface of a thermoplastic polyester resin container is coated with a cured film formed from a coating composition comprising, as a curable resin component, a silsesquioxane derivative having a ladder or random structure, the silsesquioxane derivative comprising RSiO_{3/2} as repeating units, wherein all of the repeating units contained in a single molecule consists of 100 to 25 mol% of a repeating unit having a 2-(3,4-epoxycyclohexyl)ethyl group as R as an essential component and 0 to 75 mol% of a repeating unit having an aryl group or an alkyl group having 1 to 12 carbon atoms as R as an optional component. As the silsesquioxane derivative, any silsesquioxane derivative prepared by hydrolyzing/co-condensing a trialkoxysilane having a 2-(3,4-epoxycyclohexyl)ethyl group as an essential component and a trialkoxysilane having an aryl group or an alkyl group having 1 to 12 carbon atoms as an optional component in a molar ratio of 100:0 to 25:75 or any silsesquioxane derivative having a structure equivalent to that of the preceding one can be used. For example, silsesquioxane obtainable by using as starting materials a trialkoxysilane having a
2-(3,4-epoxycyclohexyl)ethyl group as an essential component and a trialkoxysilane having an aryl group or an alkyl group having 1 to 12 carbon atoms as an optional component. It is also possible to use one prepared by producing a silsesquioxane compound using a trialkoxysilane having an appropriate functional group (e.g., a vinyl group) and then reacting a compound having a 2-(3,4-epoxycyclohexyl)ethyl group to the functional group, thereby introducing the group into the compound. Generally, it is easy to produce the silsesquioxane derivative by the first method. Accordingly, the case where a trialkoxysilane having 2-(3,4-epoxycyclohexyl)ethyl group is used as a raw material is mainly described hereafter, but it can be produced in a known way also in the case of using the second method.

The aforementioned silsesquioxane derivative may be any one having a ladder and/or random structure and having a 2-(3,4-epoxycyclohexyl)ethyl group. The silsesquioxane derivative is a derivative of a polysiloxane having the structure of (RSiO_{3/2})n and containing RSiO_{3/2} as repeating units, wherein R is a group contained in a trialkoxysilane. The silsesquioxane derivative may be one mainly containing one having a ladder structure, one having a random structure, or a mixture thereof.

Generally, silsesquioxane derivatives are known to be obtainable mainly in a ladder type, random type, or cage type structure depending on conditions for hydrolysis and co-condensation. Examples of a method by which a ladder or random structure can mainly be obtained include the method disclosed in JP-A-6-306173. Moreover, examples disclosed in the present description can be referred to.

In a concrete description of the aforementioned production method, for example, in the case of a product mainly including a ladder or random structure, water is added in an amount of 1 to 3 mol relative to 1 mol of alkoxy groups, and then hydrolysis and co-condensation are performed at a reaction temperature of 25 to 50 °C for a reaction time of 3 to 12 hours under stirring optionally using an acidic catalyst or a basic catalyst. In this method, an organic solvent such as alcohol may be used together.

Examples of the acidic catalyst include hydrochloric acid, sulfuric acid, nitric acid, acetic acid, phosphoric acid, boric acid, trifluoroacetic acid, trifluoromethanesulfonic acid, and P-toluenesulfonic acid. Fluorine compounds such as tetrabutylammonium fluoride, potassium fluoride, and sodium fluoride can also be used. The loading thereof is preferably 0.1 to 5% by weight, where the reactive component solid amount is taken as 100 parts by weight.

As the basic catalyst, sodium hydroxide, potassium hydroxide, tetramethylammonium hydroxide, tetrabutylammonium hydroxide, etc. can be used. The loading thereof is preferably 0.1 to 5% by weight, where the reactive component solid amount is taken as 100 parts by weight.

The weight average molecular weight Mw of the silsesquioxane derivative in the present invention is preferably 1500 to 20000. If the weight average molecular weight Mw is less than 1500, the hardness will be insufficient, whereas if it exceeds 20000, the viscosity will be high and the workability may be poor. More preferably, the weight average molecular weight Mw is 2000 to 10000.

Specific examples of the trialkoxysilane having a 2-(3,4-epoxycyclohexyl)ethyl group include 2-(3,4-epoxycyclohexyl)ethyltrimethoxysilane and 2-(3,4-epoxycyclohexyl)ethyltriethoxysilane.

In the trialkoxysilane having an aryl group or an alkyl group having 1 to 12 carbon atoms, examples of the alkyl group having 1 to 12 carbon atoms preferably include methyl, ethyl, propyl, isopropyl, butyl, isobutyl, s- or t-butyl, pentyl, isopentyl, neopentyl, octyl, isooctyl, and dodecyl. Among these, alkyl groups having 2 to 8 carbon atoms are more preferable. Examples of the aryl group preferably include a phenyl group, a benzyl group, a tolyl group, and a xylyl group. Among these, a phenyl group is more preferable. The alkoxy group is not particularly limited, and examples thereof preferably include a methoxy group, an ethoxy group, and a propoxy group. Among these, a methoxy group and an ethoxy group are more preferable.

Specific examples of the trialkoxysilane having an aryl group or an alkyl group having 1 to 12 carbon atoms include methyltrimethoxysilane, methyltriethoxysilane, ethyltrimethoxysilane, butyltrimethoxysilane, phenyltrimethoxysilane, hexyltrimethoxysilane, isooctyltrimethoxysilane, and decyltrimethoxysilane.

The incorporating molar ratio of the trialkoxysilane having a 2-(3,4-epoxycyclohexyl)ethyl group to the trialkoxysilane having an aryl group or an alkyl group having 1 to 12 carbon atoms is from 100:0 to 25:75, preferably from 100:0 to 50:50. If the molar ratio of the trialkoxysilane having a 2-(3,4-epoxycyclohexyl)ethyl group is less than 25, the adhesion property or the solvent resistance deteriorate after curing.

In the present invention, the silsesquioxane derivative is prepared in the form of a coating composition containing the silsesquioxane derivative as a curable resin component and then used and a coating cured film is formed therefrom. During this course, the coating cured film may be formed by performing polymerization in the presence of a thermal cationic polymerization initiator.

As the thermal cationic polymerization initiator, for example, ADEKA OPTON CP-66 , ADEKA OPTON CP-77 (produced by ADEKA CORPORATION), SAN-AID SI-60L, SAN-AID SI-80L, SAN-AID SI-100L (produced by SANSHIN CHEMICAL INDUSTRY CO., LTD.), K-PURE CXC-1614, K-PURE CXC-1612, K-PURE CXC-1751, K-PURE CXC-1761, K-PURE CXC-1802, K-PURE CXC-1821, K-PURE CXC-2278, K-PURE TAG-2678, K-PURE TAG-2681, K-PURE TAG-2685, K-PURE K-PURE TAG-2689, K-PURE TAG-2690, K-PURE K-PURE TAG-2700, K-PURE TAG-2711, K-PURE TAG-2713 (produced by King industry), etc. can be used individually or in combination.

The amount of a thermal cationic polymerization initiator to be used is preferably 0.05 to 5 parts by weight, particularly preferably 0.1 to 1 part by weight, where the silsesquioxane derivative solid amount is taken as 100 parts by weight.

In the present invention, the coating composition using the silsesquioxane derivative can be cured at, for example, 40 to 120°C and a curing time of, for example, several seconds to approximately 3 hours as curing conditions.

In the present invention, the aforementioned composition may use a solvent as needed as long as no adverse effects are imparted to an object to be coated, and examples of solvents to be usually used include alcohols such as methanol and ethanol; ethers such as tetrahydrofuran; glycol ethers such as ethylene glycol monomethyl ether, ethylene glycol monoethyl ether, ethylene glycol monobutyl ether, ethylene glycol dimethyl ether, diethylene glycol monomethyl ether, diethylene glycol monoethyl ether, diethylene glycol dimethyl ether, diethylene glycol diethyl ether, and diethylene glycol monobutyl ether; alkylene glycol monoalkyl ether acetates such as methylcellosolve acetate, ethylcellosolve acetate, butylcellosolve acetate, propylene glycol methyl ether acetate, and 3-methoxybutyl-1-acetate; aromatic hydrocarbons such as toluene and xylene; ketones such as methyl ethyl ketone, methyl isobutyl ketone, methyl amyl ketone, cyclohexanone, and 4-hydroxy-4-methyl-2-pentanone; and esters such as ethyl 2-hydroxypropionate, methyl 2-hydroxy-2-methylpropionate, ethyl 2-hydroxy-2-methylpropionate, ethyl ethoxyacetate, ethyl hydroxyacetate, methyl 2-hydroxy-2-methylbutanoate, methyl 3-methoxypropionate, ethyl 3-methoxypropionate, methyl 3-ethoxypropionate, ethyl 3-ethoxypropionate, ethyl acetate, butyl acetate, methyl lactate, ethyl lactate. These solvents may be used individually or two or more of them may be used in combination.

While the loading of the solvent is not particularly limited as long as the whole composition can form a homogeneous solution, it is preferably about 10 to about 90% by weight, more preferably 30 to 60% by weight, of the whole coating composition, for example.

In the present invention, the composition may contain a surfactant, a silane coupling agent, a hindered amine light stabilizer, a hindered phenolic antioxidant, etc. unless the object of the present invention is impaired.

Examples of the surfactant include MEGAFAC R-08 (trade name), MEGAFAC F-410 (trade name) (both produced by Dainippon Ink and Chemicals), and EF-102 (trade name) (produced by JEMCO Inc.).

Examples of the silane coupling agent include γ-glycidoxypropyltrimethoxysilane, γ-glycidoxypropyltriethoxysilane, β-(3,4-epoxycyclohexyl)ethyltrimethoxysilane, β-(3,4-epoxycyclohexyl)ethyltriethoxysilane, vinyltrimethoxysilane, and vinyltriethoxysilane.

Examples of the hindered amine light stabilizer include TINUVIN (registered trademark) 770, TINUVIN (registered trademark) 622LD (both produced by Ciba Specialty Chemicals), and ADK STAB (registered trademark) LA-57 (produced by Asahi Denka Co., Ltd.).

Examples of the hindered phenolic antioxidant include IRGANOX (registered trademark) 1010 (produced by Ciba Specialty Chemicals), NOCRAC NS-30 (trade name) (produced by Ouchi Shinko Chemical Industrial Co., Ltd.), and TOMINOX TT (trade name) (produced by Yoshitoyo Fine Chemicals, Ltd.).

The loading of the silane coupling agent is preferably from 0.1 to 5 phr, more preferably from 0.5 to 2 phr in the composition. The loading of the hindered amine light stabilizer is preferably from 0.01 to 0.5 phr, more preferably from 0.1 to 0.3 phr in the composition. The loading of the hindered phenolic antioxidant is preferably from 0.01 to 0.5 phr, more preferably from 0.1 to 0.3 phr in the composition.

In one example of a method for producing the solvent-resistant resin container of the present invention, for example, at least the inside surface of a thermoplastic polyester resin container is coated with the composition described above, and subsequently, the coating film is cured to form a coating cured film, and thus at least the inside surface is coated with the cured film formed of the coating composition.

Preferred as the thermoplastic polyester resin in the thermoplastic polyester resin container is polyethylene terephthalate or a modified polyester resin; examples of the modified polyester resin include an acrylic-modified polyester resin, an epoxy-modified polyester resin, and a glycol-modified polyester resin, and the glycol-modified polyester resin is preferred among them. Preferred as the glycol-modified polyester resin is glycol-modified polyethylene terephthalate.

Examples of the glycol-modified polyester resin include one prepared using terephthalic acid as the dicarboxylic acid component and ethylene glycol and cyclohexane dimethanol as the diol component, for example, one prepared using cyclohexane dimethanol in an amount of less than 50 mol%, for example, preferably 20 to 40 mol%, more preferably 25 to 40 mol%, even more preferably 30 to 34 mol%, of the diol component, or one prepared using cyclohexane dimethanol in an amount of 50 mol% or more, for example, 70 to 90 mol%. Among them, one prepared using cyclohexane dimethanol in an amount of less than 50 mol%, for example, 20 to 40 mol%, of the diol component is called glycol-modified polyethylene terephthalate. The glycol-modified polyethylene terephthalate is also called G-PET.

Examples of commercial products of the glycol-modified polyethylene terephthalate include Tritan TX1000, Tritan TX1001, Tritan TX2000, Tritan TX2001, Easter GN001, Easter GN119, Easter 5011, Easter EB062, Easter DN011, Easter AN004, Easter AN014, and Easter C015, produced by Eastman.

While the aforementioned thermoplastic polyester resin container can be produced by various methods, an injection molding method is preferred because containers superior in design characteristics can be produced thereby. Technologies known as the injection molding method can be used.

As a method of coating at least the inside surface of a thermoplastic polyester resin container with the composition described above, there can be used such methods as dip coating, spray coating, nozzle coating, and spin coating. At this time, only the inside surface of the container is required to be coated, but both the inside surface and the outside surface of the container may be coated. The thickness of the coating film is preferably, for example, about 2 to 100 µm in order to impart sufficient solvent resistance.

Such a solvent-resistant resin container of the present invention has superior solvent resistance due to the configuration described above. While the solvent-resistant resin container of the present invention has resistance against solvents usually used, the container has superior resistance against such solvents as alcohols including ethanol and modified alcohols and acetone, and, for example, has resistance under severe conditions including exposure to such a solvent at high temperatures for a long period of time. Accordingly, the container can be used suitably for applications such as a cosmetic container, a medical container, and a bottle for hair care. In particular, it can be suitably used for containers for cosmetics using alcohols such as ethanol and modified alcohols, acetone, or the like as a solvent, e.g., perfume and nail varnish. Accordingly, the cosmetic container of the present invention is made of the solvent-resistant resin container of the present invention and it is further provided with design such as a label and a cap as needed.

### EXAMPLES

The present invention will be explained below in more detail by providing examples, but the present invention is not limited thereto.

### Synthesis Example 1

### Synthesis of silsesquioxane derivative (SQ-1)

A reaction vessel equipped with a stirrer and a thermometer was charged with 100 g of MIBK, 6.0 g of a 20% aqueous solution of tetramethylammonium hydroxide (13.2 mmol of tetramethylammonium hydroxide), and 16.9 g of distilled water, and then 100 g (403 mmol) of
2-(3,4-epoxycyclohexyl)ethyltrimethoxysilane was added slowly at 45 to 50°C, followed by stirring for 3 hours. After completion of the reaction, 100 g of MIBK was added into the system, which was then washed with 100 g of distilled water until the pH of the aqueous layer became neutral. Subsequently, the system was washed with 50 g of distilled water twice and MIBK was distilled off under reduced pressure, and thus the desired compound (SQ-1) was obtained. The Mw thereof was 3370. The product was confirmed to be silsesquioxane mainly including a ladder or random structure having a degree of dispersion Mw/Mn of 1.62 and having a peak of residual silanol at near 3500 cm⁻¹ detected in IR measurement.

### Synthesis Example 2

### Synthesis of silsesquioxane derivative (SQ-2)

A reaction vessel equipped with a stirrer and a thermometer was charged with 100 g of MIBK, 6.7 g of a 20% aqueous solution of tetramethylammonium hydroxide (14.6 mmol of tetramethylammonium hydroxide), and 18.8 g of distilled water, and then 44.4 g (224 mmol) of phenyltrimethoxysilane and 55.6.0 g (224 mmol) of 2-(3,4-epoxycyclohexyl)ethyltrimethoxysilane were added slowly at 45 to 50°C, followed by stirring for 3 hours. After completion of the reaction, 100 g of MIBK was added into the system, which was then washed with 50 g of distilled water until the pH of the aqueous layer became neutral. Subsequently, the system was washed with 50 g of distilled water twice and MIBK was distilled off under reduced pressure, and thus the desired compound (SQ-2) was obtained. The Mw thereof was 3160. The product was confirmed to be silsesquioxane mainly including a ladder or random structure having a degree of dispersion Mw/Mn of 1.61 and having a peak of residual silanol at near 3500 cm⁻¹ detected in IR measurement.

### Synthesis Example 3

### Synthesis of silsesquioxane derivative (SQ-3)

A reaction vessel equipped with a stirrer and a thermometer was charged with 100 g of MIBK, 5.8 g of a 20% aqueous solution of tetramethylammonium hydroxide (12.6 mmol of tetramethylammonium hydroxide), and 16.2 g of distilled water, and then 76.0 g (290 mmol) of n-decyltrimethoxysilane and 24.0 g (97 mmol) of 2-(3,4-epoxycyclohexyl)ethyltrimethoxysilane were added slowly at 45 to 50°C, followed by stirring for 3 hours. After completion of the reaction, 100 g of MIBK was added into the system, which was then washed with 50 g of distilled water until the pH of the aqueous layer became neutral. Subsequently, the system was washed with 50 g of distilled water twice and MIBK was distilled off under reduced pressure, and thus the desired compound (SQ-3) was obtained. The Mw thereof was 4470. The product was confirmed to be silsesquioxane mainly including a ladder or random structure having a degree of dispersion Mw/Mn of 1.63 and having a peak of residual silanol at near 3500 cm⁻¹ detected in IR measurement.

### Comparative Synthesis Example 1

### Synthesis of silsesquioxane derivative (SQ-4)

A reaction vessel equipped with a stirrer and a thermometer was charged with 100 g of MIBK, 6.5 g of a 20% aqueous solution of tetramethylammonium hydroxide (11.4 mmol of tetramethylammonium hydroxide), and 18.3 g of distilled water, and then 100 g (423 mmol) of 3-glycidoxypropyltrimethoxysilane was added slowly at 45 to 50°C, followed by stirring for 3 hours. After completion of the reaction, 100 g of MIBK was added into the system, which was then washed with 50 g of distilled water until the pH of the aqueous layer became neutral. Subsequently, the system was washed with 50 g of distilled water twice and MIBK was distilled off under reduced pressure, and thus the desired compound (SQ-4) was obtained. The Mw thereof was 2660. The product was confirmed to be silsesquioxane mainly including a ladder or random structure having a degree of dispersion Mw/Mn of 1.61 and having a peak of residual silanol at near 3500 cm⁻¹ detected in IR measurement.

### Comparative Synthesis Example 2

### Synthesis of silsesquioxane derivative (SQ-5)

A reaction vessel equipped with a stirrer and a thermometer was charged with 100 g of MIBK, 6.5 g of a 20% aqueous solution of tetramethylammonium hydroxide (11.4 mmol of tetramethylammonium hydroxide), and 18.3 g of distilled water, and then 81.9 g (413 mmol) of phenyltrimethoxysilane and 18.1 g (73 mmol) of 2-(3,4-epoxycyclohexyl)ethyltrimethoxysilane were added slowly at 45 to 50°C, followed by stirring for 3 hours. After completion of the reaction, 100 g of MIBK was added into the system, which was then washed with 50 g of distilled water until the pH of the aqueous layer became neutral. Subsequently, the system was washed with 50 g of distilled water twice and MIBK was distilled off under reduced pressure, and thus the desired compound (SQ-5) was obtained. The Mw thereof was 4720. The product was confirmed to be silsesquioxane mainly including a ladder or random structure having a degree of dispersion Mw/Mn of 1.64 and having a peak of residual silanol at near 3500 cm⁻¹ detected in IR measurement.

### Examples 1 to 3, Comparative Examples 1 to 5

Coating compositions (Examples 1 to 3, Comparative Examples 1 to 5) were prepared by stirring mixtures of components combined in accordance with Table 1. Comparative Example 1 represents a composition in which a silsesquioxane derivative mainly including a ladder or random structure is used but its functional groups are different from the configuration of the present invention. Comparative Example 2 represents a composition in which a silsesquioxane derivative mainly including a ladder or random structure is used but its functional groups ratio is smaller than the determined value of the present invention. Comparative Examples 3 and 4 each represent a composition in which a silsesquioxane having a cage structure was used. Comparative Example 5 represents a composition in which an alicyclic epoxy was used, which is a conventional technology. The numerical values given in Table 1 represent parts by mass.

### Evaluation methods

Containers of Tritan TX2001 (produced by Eastman) produced by injection molding were dipped into the individual coating compositions of Examples 1 to 3 and Comparative Examples 1 to 5 and thus coating films having a thickness of about 10 µm were formed. They were then cured at 80°C for one hour. For the coated containers prepared, the following items before and after immersion in 95% ethanol or acetone at 50°C for one week were evaluated and solvent resistance was evaluated. The result is shown in Table 1.
(1) Initial Appearance: Initial appearance was evaluated visually according to the following criteria.
   ○: No change occurred.
   ×: Whitening occurred.
(2) Appearance after immersion: Appearance after immersion was evaluated visually according to the following criteria.
   ○: No change occurred.
   ×: Whitening occurred.
   -: Evaluation was not carried out because whitening occurred even in the initial stage. (Comparative Examples 3 to 5)

**[Table 1]**

| | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Formulation | SQ-1 | 50 | - | - | - | - | - | - | - |
| | SQ-2 | - | 50 | - | - | - | - | - | - |
| | SQ-3 | - | - | 50 | - | - | - | - | - |
| | SQ-4 | - | - | - | 50 | - | - | - | - |
| | SQ-5 | - | - | - | - | 50 | - | - | - |
| | OX-SQTX-100 | - | - | - | - | - | 50 | - | - |
| | OX-SQSI-20 | - | - | - | - | - | - | 50 | - |
| | 2021P | - | - | - | - | - | - | - | 50 |
| | CXC-1614 | 0.2 | 0.2 | 0.2 | 0.2 | 0.2 | 0.2 | 0.2 | 0.2 |
| | PGME | 50 | 50 | 50 | 50 | 50 | 50 | 50 | 50 |
| Solvent Resistance | Initial Appearance | ○ | ○ | ○ | ○ | ○ | × | × | × |
| | Appearance After Immersion In Acetone | ○ | ○ | ○ | × | × | - | - | - |
| | Appearance After Immersion In Ethanol | ○ | ○ | ○ | × | × | - | - | - |

The meanings of the abbreviations given in Table 1 are as follows:
OX-SQTX-100: Cage type silsesquioxane containing an oxetanyl group (functional group equivalent weight = 209 g/eq, produced by Toagosei Co., Ltd.)
OX-SQSI-20: Cage type silsesquioxane containing an oxetanyl group (functional group equivalent weight = 262 g/eq, produced by Toagosei Co., Ltd.)
2021P: 3',4'-epoxycyclohexylmethyl
   3,4-epoxycyclohexanecarboxylate (produced by Daicel Corporation)
CXC-1614: Trifluoromethanesulfonic acid (produced by King Industry)
PGME: Propylene glycol monomethyl ether

The results of examples showed that Examples 1 to 3, in which coating compositions of the present invention were used, exhibited superior resistance against both acetone and alcohol and therefore were superior in solvent resistance even under severe conditions.

On the other hand, Comparative Examples 1 and 2, which use a silsesquioxane derivative mainly including a ladder or random structure but do not have the configuration of the present invention, were insufficient in solvent resistance. In Comparative Examples 3 and 4, in which a cage type silsesquioxane was used, whitening occurred even in the initial stage.

The composition of Comparative Example 5, which belongs to conventional technology, began to whiten in an early stage.

These results revealed that it is important to possess the configuration of the present invention in order to attain the object of the present invention.

## Claims

1. A solvent-resistant resin container that is a thermoplastic polyester resin container in which at least the inside surface of the thermoplastic polyester resin container is coated with a cured film formed from a coating composition comprising, as a curable resin component, a silsesquioxane derivative having a ladder or random structure, the silsesquioxane derivative comprising RSiO_{3/2} as repeating units, wherein all of the repeating units contained in a single molecule consists of 100 to 25 mol% of a repeating unit having a 2-(3,4-epoxycyclohexyl)ethyl group as R as an essential component and 0 to 75 mol% of a repeating unit having an aryl group or an alkyl group having 1 to 12 carbon atoms as R as an optional component.

2. The solvent-resistant resin container according to claim 1, wherein a thermoplastic polyester resin of the thermoplastic polyester resin container is a polyethylene terephthalate or a modified polyester resin.

3. The solvent-resistant resin container according to claim 2, wherein the thermoplastic polyester resin is a glycol-modified polyester resin.

4. The solvent-resistant resin container according to claim 3, wherein the glycol-modified polyester resin is glycol-modified polyethylene terephthalate.

5. The solvent-resistant resin container according to any one of claims 1 to 4, wherein the thermoplastic polyester resin container is an injection molded container.

6. A cosmetics container for cosmetics containing ethanol and/or acetone, comprising the solvent-resistant resin container according to any one of claims 1 to 5.

7. The cosmetics container according to claim 6, the container being a perfume container.

8. A method for producing a solvent-resistant resin container, comprising coating at least the inside surface of a thermoplastic polyester resin container with a cured film formed from a coating composition comprising, as a curable resin component, a silsesquioxane derivative having a 2-(3,4-epoxycyclohexyl)ethyl group and having a ladder or random structure, the silsesquioxane derivative being obtainable by hydrolyzing/co-condensing a trialkoxysilane having a 2-(3,4-epoxycyclohexyl)ethyl group as an essential component and a trialkoxysilane having an aryl group or an alkyl group having 1 to 12 carbon atoms as an optional component in a molar ratio of from 100:0 to 25:75.
